# EUROPÄISCHE PATENTSCHRIFT

(11) **EP 1 663 739 B1**
(45) Veröffentlichungstag und Bekanntmachung des Hinweises auf die Patenterteilung: **15.04.2009**
(21) Anmeldenummer: 04735725.6
(22) Anmeldetag: 02.06.2004
(51) Int. Cl.: B60S 1/04, F16B 17/00, F16F 7/00

(54) **SCHEIBENWISCHVORRICHTUNG, INSBESONDERE FÜR EIN KRAFTFAHRZEUG**
WINDSCREEN WIPER DEVICE IN PARTICULAR FOR A MOTOR VEHICLE
DISPOSITIF D'ESSUYAGE DE VITRE DESTINE EN PARTICULIER A UN VEHICULE AUTOMOBILE

(30) Priorität: 08.09.2003 DE 10341282
(43) Veröffentlichungstag der Anmeldung: 07.06.2006
(73) Patentinhaber: ROBERT BOSCH GMBH, 70442 Stuttgart (DE)
(72) Erfinder: STUBNER, Armin, 77815 Buehl-Altschweier (DE)
(86) Internationale Anmeldenummer: PCT/DE2004/001123
(87) Internationale Veröffentlichungsnummer: WO 2005/025951

(56) Entgegenhaltungen:
- EP-A- 1 040 972
- DE-A- 10 035 476
- DE-A- 10 161 976
- DE-U- 20 210 411
- FR-A- 2 745 250
- GB-A- 2 228 188

## Beschreibung

### Stand der Technik

Die Erfindung betrifft eine Scheibenwischvorrichtung, insbesondere für ein Kraftfahrzeug, nach dem Oberbegriff des unabhängigen Anspruchs.

Es sind schon zahlreiche Scheibenwischvorrichtungen für Kraftfahrzeuge bekannt, die ein Entkopplungselement aufweisen, dass zur Befestigung der Scheibenwischvorrichtung im oder am Kraftfahrzeug dient. Aus der DE-A-101 14 033 ist beispielsweise eine Scheibenwischvorrichtung bekannt, bei der ein ringförmiges Entkopplungselement mit einer Schraube vorgesehen ist, die zur Befestigung an der Karosserie des Kraftfahrzeugs dient.

Derartige Entkopplungselemente sind jedoch sehr groß und müssen in der Fertigung relativ aufwändig eingefädelt werden. Außerdem sind diese Elemente nur bedingt für einen Wischer-Direkt-Antrieb geeignet, bei dem der Wischerarm mit dem Wischblatt - ohne ein Schubstangen-Getriebe - direkt mit der Abtriebswelle einer Antriebseinrichtung verbunden ist. Die Antriebseinrichtung umfasst bei derartigen Scheibenwischvorrichtungen im wesentlichen nur einen Elektromotor mit einem Untersetzungsgetriebe.

Darüber hinaus sind handelsübliche Entkopplungselemente meist mit Schraubverbindungen versehen, die in Druckguss-Teilen jedoch ohne zusätzlichen Arbeitsgang nicht realisierbar sind.

Aus der GB-A-2 228188 ist weiterhin eine Scheibenwischvorrichtung mit den Merkmalen des Oberbegriffs des Anspruchs 1 bekannt.

### Vorteile der Erfindung

Die erfindungsgemäße Scheibenwischvorrichtung mit den Merkmalen des Hauptanspruches hat den Vorteil, dass durch die Anordnung eines Fügeelementes am Entkopplungselement eine einfache Verbindung zur Befestigung des Entkopplungselementes an der Scheibenwischvorrichtung zur Verfügung steht. Dies ermöglicht eine einfache Montage der Scheibenwischvorrichtung, wodurch insbesondere in der Serienfertigung ein erheblicher Kostenvorteil erzielt wird.

Durch die in den Unteransprüchen aufgeführten Maßnahmen ergeben sich vorteilhafte Weiterbildungen und Verbesserungen dem Hauptanspruch angegebenen Merkmale.

Weist das Fügeelement eine Schnapp-Verhakung auf, so ergibt sich vorteilhafterweise eine sichere Verbindung des Entkopplungselementes an der Scheibenwischvorrichtung.

Eine besonders gute Verbindung wird vorteilhafterweise dadurch erzielt, dass das Fügeelement in eine innenzylindrische Ausformung an der Scheibenwischvorrichtung eingreift.

In einer einfachen und kostengünstigen Ausführungsform ist das Fügeelement als Speed-Nut ausgebildet.

Vorteilhafterweise ist der Dämpfungsabschnitt des Entkopplungselements aus einem elastischen Material ausgebildet, um Schwingungen der Scheibenwischvorrichtung wirksam abzudämpfen und eine Übertragung auf die Fahrzeugkarosserie zu verhindern.

Weiterhin ist als vorteilhaft anzusehen, wenn die Scheibenwischvorrichtung eine Antriebseinrichtung mit einem Getriebegehäuse aufweist und das Entkopplungselement am Getriebegehäuse angreift, damit die Dämpfung durch den Dämpfungsabschnitt möglichst nahe an der Emissionsquelle, also der Antriebseinrichtung, angeordnet ist.

Durch drei Entkopplungselemente ist die Befestigung statisch genau bestimmt und bietet optimalen Halt an der Karosserie des Kraftfahrzeugs.

Besonders vorteilhaft ist es, wenn das Entkopplungselement einen Befestigungsabschnitt aufweist, der an den Dämpfungsabschnitt angeklebt oder anvulkanisiert ist.

In einer einfachen Ausführung weist der Befestigungsabschnitt ein Innen- oder Außengewinde zur Verschraubung mit dem Kraftfahrzeug auf.

In einer vorteilhaften Ausführung ist die Scheibenwischvorrichtung für einen Wischer-Direkt-Antrieb vorgesehen, bei dem auf ein Schubstangengetriebe verzichtet wird und der Wischerarm mit dem Wischblatt direkt mit der Abtriebswelle der Antriebseinrichtung verbunden ist.

### Zeichnungen

ein Ausführungsbeispiel der Erfindung ist in den Zeichnungen dargestellt und in der nachfolgenden Beschreibung näher erläutert. Es zeigen:
Figur 1 eine erfindungsgemäße Scheibenwischvorrichtung in einer schematischen Querschnittsdarstellung,
Figur 2 ein Entkopplungselement einer erfindungsgemäße Scheibenwischvorrichtung in einen Querschnitt Darstellung und
Figur 3 eine Variation des Entkopplungselementes aus Figur 2.

### Beschreibung des Ausführungsbeispiels

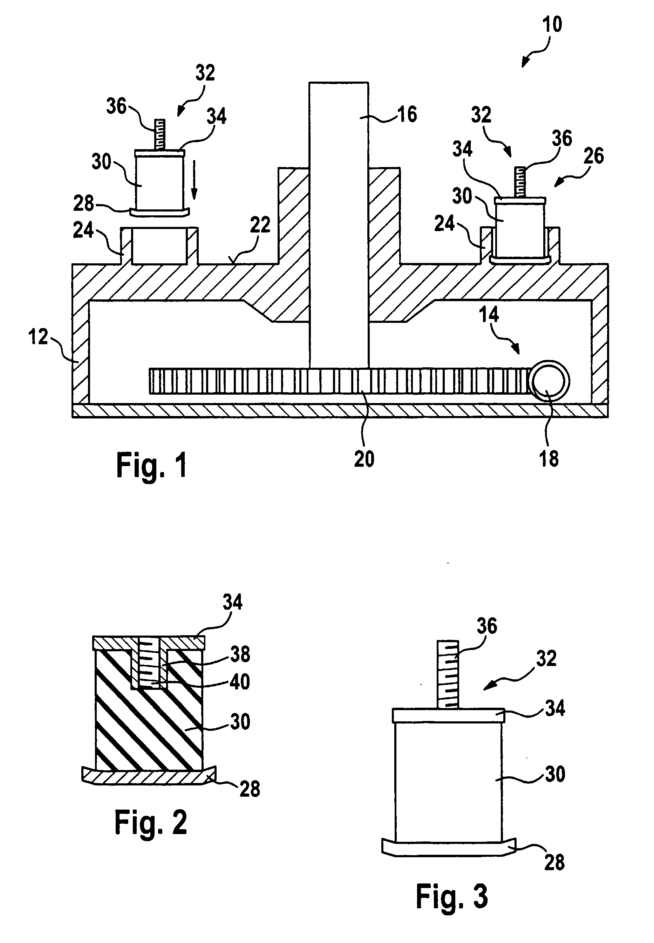

In Figur 1 ist eine erfindungsgemäße Scheibenwischvorrichtung 10 in einer schematischen Querschnittsdarstellung gezeigt. Die Scheibenwischvorrichtung 10 umfasst im wesentlichen eine Antriebseinrichtung, die hieraus Gründen der Übersichtlichkeit nicht gezeichnet ist, sowie ein Getriebegehäuse 12 das ein Getriebe 14 mit einer Abtriebswelle 16, die aus dem Getriebegehäuse 12 herausragt, umschließt. Das Getriebe 14 umfasst zumindest eine Schnecke 18 die mit einem Schneckenrad 20 kämmt, dass in seinem Drehzentrum drehfest mit der Abtriebswelle 16 verbunden ist.

Auf der, der Abtriebswelle 16 zugewandten Außenseite 22 des Getriebegehäuses 12 weist dieses drei Aufnahmen 24 auf, die als hohlzylindrische Erhebungen ausgebildet sind. In die Aufnahmen 24 ist jeweils ein Entkopplungselement 26 eingesetzt. Selbstverständlich können alternativ auch nur zwei Aufnahmen 24 oder aber vier oder mehr Aufnahmen 24 vorgesehen sein.

Das Entkopplungselement 26 weist im wesentlichen drei Abschnitte auf. Der erste Abschnitt besteht aus einem Fügeelement 28 das als Speed Nut ausgebildet ist und daher aus einer Kreisscheibe besteht, die an ihrem Umfang krallenartig nach oben, also konkav zur Fläche in der Außenseite 22 des Getriebegehäuses 12, gebogen ist. Der Durchmesser der Speed Nut ist hierbei etwas größer als der Durchmesser der hohlzylindrischen Aufnahme 24. Auf diese Weise ergibt sich eine Schnapp-Verhakung zwischen der Aufnahme 24 und dem Fügeelement 28. Bei der Montage der Scheibenwischvorrichtung 10 kann das Fügeelement 28 damit durch einen einfachen Füge Prozess am Getriebegehäuse 12 der Scheibenwischvorrichtung 10 befestigt werden. Ergänzend hierzu kann die Speed Nut 28 entlang ihrem Umfang auch eine scharfe Kante aufweisen, die für einen optimalen Halt der Speed Nut 28 in der Aufnahme 24 sorgt.

An das Fügeelement 28 schließt sich der Dämpfungsabschnitt 30 an, der aus einem elastischen Material, insbesondere Gummi besteht und zylinderförmig ausgebildet ist. Der Dämpfungsabschnitt 30 hat einen Durchmesser, der etwas kleiner ist als der Durchmesser des Fügeelementes 28 und besitzt eine Höhe, die mindestens so groß ist, wie der Durchmesser des Dämpfungsabschnitts 30. Das Fügeelement 28 und der Dämpfungsabschnitt 30 sind miteinander verklebt, beziehungsweise das Fügeelement 28 an den Dämpfungsabschnitt 30 anvulkanisiert.

An den Dämpfungsabschnitt 30 schließt sich, diametral zum Fügeelement 28, der Befestigungsabschnitt 32 an. Dieser besteht im wesentlichen aus einer Platte 34 aus deren Ebene heraus sich eine Gewindestange 36 als Außengewinde erstreckt. Die Gewindestange 36 dient der Befestigung an der Karosserie des Kraftfahrzeugs. Beim Fahrzeughersteller ist das Entkopplungselement 26 bereits montiert, sodass die Scheibenwischvorrichtung 10 lediglich in die entsprechenden Öffnungen eingesetzt und arretiert werden muss. Alternativ kann als Befestigungsabschnitt 32 natürlich auch eine Beliebige andere Verbindung vorgesehen sein, insbesondere seien hier Dreh-, Schnapp- und Klippsverbindungen genannt.

In Figur 2 ist eine Variation des Entkopplungselementes 32 aus Figur 1 dargestellt. Der Befestigungsabschnitt 32 ist hierbei als Platte ausgebildet aus deren Ebene heraus sich ein zylinderartiger Fortsatz 38 erstreckt, der mit einem Innengewinde 40 versehen ist. Der Fortsatz 38 erstreckt sich in Richtung des Dämpfungsabschnitts 30 hinein, das hierzu eine entsprechende Aussparung aufweist.

In Figur 3 ist das Befestigungselement 32 aus Figur 1 im Detail gezeigt. Die Speed Nut als Fügeelement 28 ist konkav gewölbt und weist entlang ihres Umfangs eine relativ scharfe Kante auf. Diese dient dazu, dass sich die Speed Nut 28 bei einer Krafteinwirkung, die die Speed Nut 28 aus der Aufnahme 24 herauszuziehen versucht, in die Aufnahme 24 eingräbt. An das Fügeelement 28 schließt sich der Dämpfungsabschnitt 30 an, der aus Gummi besteht unter Aufnahme von Schwingungsenergie die vorgesehen ist. An diesen wiederum schließt sich der Befestigungsabschnitt 32 an. Dieser ist auf dem Dämpfungsabschnitts 30 aufgeklebt oder anvulkanisiert.

In einer Variation der Erfindung muss das Entkopplungselement 26 und die Aufnahme 24 keinesfalls kreisrund sein, sondern kann natürlich auch elliptisch oder anderweitig oval sein. Typischerweise sind die drei Aufnahmen 24 kreisrund um die Abtriebswelle 16 jeweils im Winkel von 120 Grad angeordnet. Hierbei kann natürlich auch eine der Aufnahme 24 etwas versetzt sein, sodass beim Einbau in das Kraftfahrzeug immer eine definierte Winkelstellung vorgegeben ist.

Typischerweise ist an der Abtriebswelle 16 direkt ein Wischerarm befestigt, der ein Wischblatt trägt. Dies ist bei so genannten Wischer-Direkt-Antrieben der Fall, bei denen auf einen konventionelles Schubstangengetriebe verzichtet wird.

## Patentansprüche

1. Scheibenwischvorrichtung (10), insbesondere für ein Kraftfahrzeug, mit einem Entkopplungselement (26) zur Befestigung der Scheibenwischvorrichtung (10) im oder am Kraftfahrzeug, das einen Dämpfungsabschnitt (30) aufweist, wobei am Entkopplungselement (26) ein Fügeelement (28) vorgesehen ist, so dass das Entkopplungselement (26) durch einen Füge-Prozess an der Scheibenwischvorrichtung (10) befestigt ist, **dadurch gekennzeichnet, dass** das Fügeelement (28) als Speed-Nut ausgebildet ist.

2. Scheibenwischvorrichtung (10) nach Anspruch 1, **dadurch gekennzeichnet, dass** das Fügeelement (28) eine Schnapp-Verhakung aufweist.

3. Scheibenwischvorrichtung (10) nach einem der vorhergehenden Ansprüche, **dadurch gekennzeichnet, dass** das Fügeelement (28) in eine innenzylindrische Ausformung an der Scheibenwischvorrichtung (10) eingreift.

4. Scheibenwischvorrichtung (10) nach einem der vorhergehenden Ansprüche, **dadurch gekennzeichnet, dass** der Dämpfungsabschnitt (30) aus elastischen Material ausgebildet ist.

5. Scheibenwischvorrichtung (10) nach einem der vorhergehenden Ansprüche, **dadurch gekennzeichnet, dass** eine Antriebseinrichtung mit einem Getriebegehäuse (12) vorgesehen ist und das Entkopplungselement (26) am Getriebegehäuse (12) angreift.

6. Scheibenwischvorrichtung (10) nach einem der vorhergehenden Ansprüche, **dadurch gekennzeichnet, dass** genau drei Entkopplungselemente (26) vorgesehen sind.

7. Scheibenwischvorrichtung (10) nach einem der vorhergehenden Ansprüche, **dadurch gekennzeichnet, dass** das Entkopplungselement (26) einen Befestigungsabschnitt (32) aufweist, der an den Dämpfungsabschnitt (30) angeklebt oder anvulkanisiert ist.

8. Scheibenwischvorrichtung (10) nach Anspruch 7**, dadurch gekennzeichnet, dass** der Befestigungsabschnitt (32) ein Innen- oder Außengewinde (36, 40) zur Verschraubung mit dem Kraftfahrzeug aufweist.

9. Scheibenwischvorrichtung (10) nach einem der vorhergehenden Ansprüche, **dadurch gekennzeichnet, dass** die Scheibenwischvorrichtung (10) für einen Wischer-Direkt-Antrieb vorgesehen ist.

## Claims

1. Windscreen wiper device (10), in particular for a motor vehicle, with a decoupling element (26) for fastening the windscreen wiper device (10) in or to the motor vehicle, said decoupling element having a damping section (30), wherein a joining element (28) is provided on the decoupling element (26), and therefore the decoupling element (26) is fastened to the windscreen wiper device (10) by a joining process, **characterized in that** the joining element (28) is designed as a speed nut.

2. Windscreen wiper device (10) according to Claim 1, **characterized in that** the joining element (28) has snap-type interlocking.

3. Windscreen wiper device (10) according to one of the preceding claims, **characterized in that** the joining element (28) engages in an internally cylindrical moulding on the windscreen wiper device (10).

4. Windscreen wiper device (10) according to one of the preceding claims, **characterized in that** the damping section (30) is formed from elastic material.

5. Windscreen wiper device (10) according to one of the preceding claims, **characterized in that** a driving device is provided with a gear housing (12), and the decoupling element (26) acts on the gear housing (12).

6. Windscreen wiper device (10) according to one of the preceding claims, **characterized in that** a total of three decoupling elements (26) are provided.

7. Windscreen wiper device (10) according to one of the preceding claims, **characterized in that** the decoupling element (26) has a fastening section (32) which is adhesively bonded or vulcanized onto the damping section (30).

8. Windscreen wiper device (10) according to Claim 7, **characterized in that** the fastening section (32) has an internal or external thread (36, 40) for screwing to the motor vehicle.

9. Windscreen wiper device (10) according to one of the preceding claims, **characterized in that** the windscreen wiper device (10) is provided for a wiper direct drive.

## Revendications

1. Dispositif d'essuie-glace (10), en particulier pour un véhicule automobile, comprenant un élément de désaccouplement (26) pour la fixation du dispositif d'essuie-glace (10) dans ou sur le véhicule automobile, qui présente une portion d'amortissement (30), un élément de joint (28) étant prévu sur l'élément de désaccouplement (26), de sorte que l'élément de désaccouplement (26) soit fixé au dispositif d'essuie-glace (10) par un processus d'assemblage, **caractérisé en ce que** l'élément de joint (28) est réalisé sous forme d'écrou rapide.

2. Dispositif d'essuie-glace (10) selon la revendication 1, **caractérisé en ce que** l'élément de joint (28) présente un assemblage par encliquetage.

3. Dispositif d'essuie-glace (10) selon l'une quelconque des revendications précédentes, **caractérisé en ce que** l'élément de joint (28) vient en prise dans une formation cylindrique interne avec le dispositif d'essuie-glace (10).

4. Dispositif d'essuie-glace (10) selon l'une quelconque des revendications précédentes, **caractérisé en ce que** la portion d'amortissement (30) est réalisée en matériau élastique.

5. Dispositif d'essuie-glace (10) selon l'une quelconque des revendications précédentes, **caractérisé en ce qu'**un dispositif d'entraînement est prévu avec une boîte de transmission (12), et l'élément de désaccouplement (26) vient en prise avec la boîte de transmission (12).

6. Dispositif d'essuie-glace (10) selon l'une quelconque des revendications précédentes, **caractérisé en ce que** l'on prévoit exactement trois éléments de désaccouplement (26).

7. Dispositif d'essuie-glace (10) selon l'une quelconque des revendications précédentes, **caractérisé en ce que** l'élément de désaccouplement (26) présente une portion de fixation (32), qui est collée ou vulcanisée sur la portion d'amortissement (30).

8. Dispositif d'essuie-glace (10) selon la revendication 7, **caractérisé en ce que** la portion de fixation (32) présente un filetage interne ou externe (36, 40) pour le vissage au véhicule automobile.

9. Dispositif d'essuie-glace (10) selon l'une quelconque des revendications précédentes, **caractérisé en ce que** le dispositif d'essuie-glace (10) est prévu pour un entraînement direct d'essuie-glace.
